# EUROPÄISCHE PATENTSCHRIFT

(11) **EP 3 252 233 B1**
(45) Veröffentlichungstag und Bekanntmachung des Hinweises auf die Patenterteilung: **01.05.2024**
(21) Anmeldenummer: 17001023.5
(22) Anmeldetag: 20.06.2015
(51) Int. Cl.: E01C 19/48

(54) **STRASSENFERTIGER**
PAVER
FINISSEUSE DE ROUTE

(30) Priorität: 02.07.2014 DE 102014109272
(43) Veröffentlichungstag der Anmeldung: 06.12.2017
(62) Teilanmeldung aus: 15001830.7
(73) Patentinhaber: Dynapac GmbH, 26203 Wardenburg (DE)
(72) Erfinder: Vertraeten, Jan, 28279 Bremen (DE); Mooren, Axel, 26209 Hatten-Sandkrug (DE); Lürding, Eberhard, 26209 Hatten (DE)
(74) Vertreter: Meissner Bolte Partnerschaft mbB

(56) Entgegenhaltungen:
- EP-A1- 0 790 353
- EP-A1- 1 627 774
- DE-U1- 29 508 396
- DE-U1- 29 612 035

## Beschreibung

Die Erfindung betrifft einen Straßenfertiger gemäß dem Oberbegriff des Anspruchs 1.

Straßenfertiger dienen der Herstellung von Straßenbelägen aus Asphalt und anderen Straßenbaumaterialien wie beispielsweise Beton. Solche Straßenfertiger sind selbstfahrend ausgebildet. Dazu verfügen sie über ein Fahrwerk, bei dem es sich um ein Kettenfahrwerk oder ein Radfahrwerk handeln kann. Straßenfertiger weisen in Einbaurichtung gesehen mindestens einen vorderen Vorratsbehälter zur Aufnahme des Straßenbaumaterials, insbesondere heißen bituminösen Asphaltmaterials auf. Das Asphaltmaterial wird vom Vorratsbehälter mittels eines Förderers unter einer Plattform mit einem Bedienstand zu einer hinteren Verteilerschnecke transportiert, die das noch heiße bituminöse Straßenbaumaterial über die Arbeitsbreite des Straßenfertigers vor mindestens einer hinteren Einbaubohle verteilt.

Zum Betreiben eines Straßenfertigers sind eine Vielzahl von Betriebs- und Maschinenparametern festzulegen. In Abhängigkeit von diesen Parametern erfolgt der Betrieb des Straßenfertigers. Ändern sich während des Betriebes des Straßenfertigers diese Parameter außerplanmäßig, verläuft der Betrieb des Straßenfertigers fehlerhaft. Es kann aber auch erwünscht sein, dass die genannten Parameter absichtlich während des Betriebes des Straßenfertigers geändert werden, um den Betrieb der sich eventuell ändernden Anforderungen anzupassen.

Die Betriebs- und Maschinenparameter sowie weitere für die Herstellung des Straßenbelags wesentlichen Parameter werden von einer Bedienperson vor oder während der Herstellung des Straßenbelags manuell eingegeben. Dazu sehen bekannte Straßenfertiger einen Bedienstand vor, der sich auf dem Straßenfertiger befindet. Üblicherweise besteht der Bedienstand aus einer offenen oder geschlossenen Kabine, von der aus die Bedienperson einen Überblick über den gesamten Straßenfertiger und einen Teil eines Arbeitsbereiches hat.

In dem Bedienstand befindet sich, wie beispielsweise in DE 29612035 U1 beschrieben, ein Fahrersitz, auf dem die Bedienperson während des Betriebes Platz nehmen kann. Des Weiteren befinden sich in dem Bedienstand ein Armaturenbrett und ein Steuermittel. Während das Armaturenbrett sämtliche zum Betrieb des Straßenfertigers wichtigen Parameter und Größen anzeigt, bzw. Schaltvorrichtungen wie Knöpfe oder dergleichen aufweist, lässt sich über die Steuermittel der Straßenfertiger beschleunigen, bremsen und steuern. Zum Bedienen bzw. Steuern des Straßenfertigers muss die Bedienperson auf dem Fahrersitz sitzen, weil sie nur von dort aus Zugriff auf die Steuermittel bzw. auf das Armaturenbrett hat. Dadurch dass die Bedienperson an den Fahrersitz gebunden ist, ist ihr Aktionsradius bzw. ihr Überblick bzw. Sicht auf den herzustellenden Straßenbelag sehr eingeschränkt. Sobald die Bedienperson sich jedoch von dem Fahrersitz erhebt oder gar den Bedienstand verlässt, verliert sie die Kontrolle über den Straßenfertiger bzw. stoppt der Betrieb des Straßenfertigers aus Sicherheitsgründen. Diese eingeschränkte Sicht der Bedienperson ist besonders bei engen und/oder schwierigen Passagen des herzustellenden Straßenbelags von Nachteil. Außerdem ist es als besonders nachteilig bzw. unkomfortabel anzusehen, dass der Fahrersitz von dem Steuermittel bzw. dem Armaturenbrett beabstandet ist. Besonders bei Bedienpersonen die aus anatomischen Gründen Schwierigkeiten haben, im Sitzen die Steuermittel zu erreichen, gestaltet sich die Bedienung des Straßenfertigers als sehr unkomfortabel. Die DE 29612035 U1 offenbart zwar ein vom Fahrersitz abnehmbares jedoch weiterhin kabelgebundenes Bedienelement.

Für den Betrieb bzw. vor der Herstellung des Straßenbelags muss der Straßenfertiger auf die örtlichen Bedingungen einnivelliert werden. Dazu sind bisher mindestens zwei Personen notwendig, nämlich eine die sich im Bedienstand aufhält und eine weitere, die sich neben dem Straßenfertiger aufhält. Während die Person neben dem Straßenfertiger Anweisungen gibt, wie der Straßenfertiger zu nivellieren ist, gibt die Person im Bedienstand entsprechende Parameter in eine Steuervorrichtung ein. Nivelliert werden müssen vor allem die Einbaubohle in Länge, Form und Höhe und die Ausrichtung des Straßenfertigers. Anhand der anfänglichen Nivellierung wird der Straßenbelag hergestellt. Die Nivellierung durch zwei Personen ist sehr kostenintensiv und weist diverse Schwierigkeiten auf. So lassen sich, insbesondere bei einer lauten Geräuschkulisse, wie sie auf Baustellen üblich ist, Kommunikationsschwierigkeiten und damit verbundene Missverständnisse nicht vermeiden. Ein falsch einnivellierter Straßenfertiger führt dazu, dass der gesamte Straßenbelag fehlerhaft hergestellt wird. Dies ist mit enormen Kosten verbunden und bedeutet sogleich einen zeitlichen Mehraufwand, der gerade im Straßenbau sehr kritisch ausfallen kann.

Straßenfertiger, insbesondere Radfertiger sind üblicherweise mit einer servohydraulischen Lenkeinrichtung ausgestattet. Demnach werden Lenkzylinder der einzelnen zu lenkenden Räder des Radfertigers direkt beim betätigen des Steuermittels angesteuert. Dabei wird durch das Lenken über die Hydraulik ein Druck auf die Lenkzylinder ausgeübt, wodurch die Räder entsprechend bewegt werden. Die Lenkeigenschaften des Radfertigers sind durch eine derartige servo-hydraulische Lenkeinrichtung begrenzt. So lässt sich beispielsweise eine Fernsteuerung der Lenkeinrichtung nur schwer realisieren.

Der Erfindung liegt nun die Aufgabe zugrunde, einen Straßenfertiger zu schaffen, bei dem die Bedienung, insbesondere die Steuerung komfortabel und einfach ausgestaltet ist.

Ein Straßenfertiger zur Lösung dieser Aufgabe weist die Merkmale des Anspruchs 1 auf. Demnach ist der Straßenfertiger gekennzeichnet durch ein Nivelliersystem für die Herstellung des Straßenbelags, das von einem Prozessrechner steuerbar ist. Durch das Steuern des Nivelliersystems von einem Prozessrechner wird die Steuerung auf dem Straßenfertiger zentralisiert und automatisiert. Es genügt nun, den genannten Prozessrechner mit von Sensoren aufgenommenen Messdaten zu versorgen, um den Straßenfertiger für die Herstellung des Straßenbelags zu nivellieren. Weiter ist es vorgesehen, dass dem Nivelliersystem mindestens eine Bedieneinheit, vorzugsweise zwei Bedieneinheiten, für das Bedienpersonal zugeordnet sind. Über die Bedieneinheiten können die Bedienpersonen von dem Straßenfertiger aus oder neben dem Straßenfertiger das Nivelliersystem bedienen, bzw. den Prozessrechner mit den nötigen Daten versorgen. Dadurch, dass dem Nivelliersystem mehrere Bedieneinheiten zugeordnet werden können, lässt sich der Vorgang des Einnivellierens dadurch beschleunigen, dass mehrere Personen jeweils mit einer Bedieneinheit verschiedene Schritte des Nivellierens bzw. an verschiedenen Stellen das Einnivellieren zeitgleich durchführen können.

Die Erfindung sieht es vor, dass die mindestens eine Bedieneinheit ein Eingabemittel und eine Schnittstelle zur kabellosen Datenübertragung aufweist. Dadurch, dass die Bedieneinheit kabellos ausgebildet ist, kann die Bedienperson sich mit dem Eingabemittel frei um den Straßenfertiger bewegen, ohne darauf achten zu müssen, dass das Kabel reißt oder beschädigt wird. Jegliche Parameter oder Eingaben die zur Nivellierung des Straßenfertigers vorgenommen werden müssen, kann die Bedienperson über eine Tastatur oder direkt über den Bildschirm eingeben. Eingaben der Bedienperson in die Bedieneinheit werden sofort über eine kabelgebundene oder kabellose Datenübertragung auf den Prozessrechner übertragen, wo die eigentliche Nivellierung des Straßenfertigers verzögerungsfrei erfolgt. Dabei dienen die übertragenen Daten nicht nur der Nivellierung direkt, sondern können auch für weitere Auswertungsvorgänge abgespeichert werden. So lässt sich auch noch im Nachhinein feststellen, wie die Nivellierung des Straßenfertigers erfolgte. Dies kann besonders vorteilhaft sein, wenn herausgefunden werden soll, warum ein Straßenbelag fehlerhaft entstanden ist.

Bevorzugt ist es weiter vorgesehen, dass zusätzliche Bedienmittel, insbesondere ein Joystick, an die Bedieneinheit anschließbar sind. Über derartige Bedienmittel lassen sich manche Elemente des Straßenfertigers wie beispielsweise die Einbaubohle, direkt per Joystick steuern bzw. einnivellieren.

Weiter kann es die Erfindung vorsehen, dass die mindestens eine Bedieneinheit kompakt bzw. flach ausgebildet ist und jeweils an einem beliebigen Platz, vorzugsweise in einem Bohlenseitenschild des Straßenfertigers, verstaubar ist. Dadurch, dass die Bedieneinheit direkt dort wo sie Verwendung findet, nämlich am Bohlenseitenschild verstaubar ist, kann eine Nivellierung direkt und schnell erfolgen, ohne dass der Bedienstand des Straßenfertigers betreten werden muss. Durch die kompakte Bauweise der Bedieneinheit werden den rauen Arbeitsbedingungen, die auf einer Straßenbaustelle üblich sind, Rechnung getragen.

Des Weiteren ist es vorgesehen, dass das Nivelliersystem Sensoren zur Ermittlung der Herstellungsparameter, insbesondere der Einbauhöhe und der Fahrbahnneigung und Sensoren für ein Bohlendachprofil der Einbaubohle aufweist. Jedes bewegliche Teil, das für die Herstellung des Straßenbelags notwendig ist, kann einen Sensor aufweisen, der einnivelliert werden muss. Zur Einnivellierung kommunizieren diese Sensoren entweder direkt mit der Bedieneinheit oder mit dem Prozessrechner. Die Bedieneinheiten können allerdings nicht nur Daten der Sensoren auslesen, sondern können diese Sensoren auch mit bestimmten Daten zur Steuerung versorgen.

Insbesondere sieht es die Erfindung weiter vor, dass die Sensoren jeweils mindestens eine einheitliche Datenschnittstelle, eine einheitliche hardwaretechnische Schnittstelle, vorzugsweise Steckverbinder und oder eine selbstständige Identifikation gegenüber dem Prozessrechner aufweisen. Dadurch kann der Prozessrechner genau erkennen, welche Information von welcher Bedieneinheit bzw. Bedienperson kommt. Eine Manipulation der Nivellierung bzw. der Steuerung des Straßenfertigers wird dadurch nachvollziehbarer und kontrollierbarer.

Außerdem kann es vorgesehen sein, dass die Lenkzylinder der mindestens zwei lenkbaren Räder abhängig oder unabhängig voneinander elektrisch ansteuerbar bzw. lenkbar sind. Dadurch, dass die Räder abhängig bzw. unabhängig voneinander ansteuerbar bzw. lenkbar sind, kann auf Situationen reagiert werden, in denen der Straßenfertiger schwierige Lenkmanöver vornehmen muss.

Als besonders vorteilhaft gestaltet sich außerdem die Möglichkeit, dass das Fahrwerk mindestens vier Räder zum Lenken mit Lenkzylindern aufweist, die paarweise oder unabhängig voneinander elektrisch ansteuerbar sind. Bei Straßenfertigern, deren Lenkung durch vier Räder erfolgt, lassen sich besonders schwierige Lenkmanöver durchführen. Insbesondere durch die elektrische Ansteuerung der Lenkzylinder können bessere Lenkeigenschaften erreicht werden. Die Lenkzylinder können durch die elektrische Ansteuerung sehr viel feiner und reproduzierbar angesteuert werden.

Des Weiteren ist es denkbar, dass die antreibbaren Räder des Fahrwerks unabhängig voneinander oder paarweise zusammen betreibbar sind, insbesondere einzeln oder zusammen beschleunigen oder bremsen können.

Des Weiteren kann es vorgesehen sein, dass die Lenkzylinder der Räder zum Lenken und/oder die antreibbaren Räder des Fahrwerks abhängig oder unabhängig voneinander durch mindestens ein Bedienelement ansteuerbar bzw. lenkbar sind, insbesondere elektrisch ansteuerbar bzw. lenkbar sind. Ein derartiges Bedienelement kann ein konventionelles Bedienelement auf dem Bedienstand des Straßenfertigers sein, oder aber auch ein kabellos bzw. kabelgebundenes Bedienelement, dass außerhalb des Bedienstandes durch die Bedienperson bedienbar ist. So lässt sich beispielsweise der Straßenfertiger per Fernsteuerung von einer beliebigen Position, insbesondere neben dem Straßenfertiger, lenken bzw. bedienen. Das hat den Vorteil, dass die Bedienperson direkt sieht, wo der Straßenfertiger entlang fährt bzw. den Straßenbelag herstellt.

Ein bevorzugtes Ausführungsbeispiel kann es weiter vorsehen, dass den antreibbaren Rädern und/oder den jeweils einen Lenkzylinder aufweisenden Rädern jeweils mindestens ein Sensor und oder ein Aktor zum elektrischen Ansteuern bzw. Lenken zugeordnet ist. Durch diese Zuordnung eines Sensors bzw. eines Aktors zum Lenkzylinder, erhält die Bedienperson direkt Auskunft über eventuelle Schwierigkeiten oder Probleme die beim Lenken des Straßenfertigers auftreten können.

Als besonders vorteilhaft kann es angesehen werden, dass wenigstens einige Räder des Fahrwerks über eine Steuerregelung durch eine Lenkeinrichtung, insbesondere über eine externe Lenkeinrichtung, vorzugsweise einen Lenkautomat ansteuerbar bzw. lenkbar sind. Über eine derartige Lenkeinrichtung bzw. einen Lenkautomaten lässt sich die Steuerung des Straßenfertigers programmieren, sodass die Herstellung des Straßenbelags automatisch erfolgt. Durch ständiges Kommunizieren des Prozessrechners mit den Sensoren und Aktoren der Lenkzylinder erfolgt eine Überprüfung des Herstellungsprozesses. Bei einer festgestellten Abweichung des vorgesehenen Herstellungsprozesses, wird der Straßenfertiger gestoppt bzw. wird ein Signal ausgelöst.

Des Weiteren ist es als besonders vorteilhaft anzusehen, dass die Lenkeinrichtung mit der Lenkung weiterer Straßenbaufahrzeuge, insbesondere Radfertiger oder Kettenfertiger koppelbar ist. Durch diese Koppelung mehrerer Straßenbaufahrzeuge lässt sich ein "Fleet Management" durchführen. Dabei werden mehrere Straßenbaufahrzeuge so koordiniert, dass der gesamte Straßenbauprozess zeitlich optimiert und aufeinander abgestimmt erfolgt. Dabei kommunizieren die Prozessrechner der einzelnen Straßenbaufahrzeuge miteinander und tauschen Daten zum Status des Herstellungsprozesses aus. Außerdem werden diese Daten durch eine zentrale Datenverarbeitungseinrichtung, wie beispielsweise der Bauaufsicht, ständig kontrolliert.

Bevorzugt kann es weiter vorgesehen sein, dass die Lenkeinrichtung für die antreibbaren Räder und/oder die jeweils einen Lenkzylinder aufweisenden Räder derart ausgestattet ist, dass sie in mehrere, verschiedenen Straßenbaufahrzeugen modulartig einbaubar ist. Durch diese modulartige bzw. baukastenartige Ausgestaltung der Lenkeinrichtung können, insbesondere Herstellungskosten minimiert werden. Außerdem lassen sich ältere Straßenfertiger so einfach mit einer Lenkeinrichtung ausstatten.

Es kann außerdem weiter vorgesehen sein, dass die Lenkeinrichtung über mindestens eine redundante baugleiche Einrichtung verfügt, die bei Störung der Lenkeinrichtung die Lenkung des Straßenfertigers übernimmt. Besonders bei elektrisch betriebenen Lenkeinrichtungen, ist es vorteilhaft, dass beim Ausfall eines elektrischen Signalgebers oder Empfängers oder dergleichen ein redundantes System diesen Ausfall kompensiert.

Dadurch können Leerlaufzeiten bzw. Standzeiten des Straßenfertigers bzw. der gesamten Baustelle minimiert bzw. verhindert werden.

Ein Straßenfertiger kann außerdem derart ausgebildet sein, dass die Antriebe der mindestens zwei angetriebenen Räder unabhängig voneinander elektrisch ansteuerbar sind. Außerdem ist es vorgesehen, dass durch elektrische Ansteuerung der Antriebe die mindestens zwei, vorzugsweise vier, angetriebenen Räder unabhängig voneinander oder paarweise zusammen betreibbar sind, insbesondere einzeln oder zusammen beschleunigt oder bremsbar sind. Durch diese elektrische Ansteuerung der angetriebenen Räder können die Lenkeigenschaften des Straßenfertigers verbessert werden. So wird beispielsweise eine Drehung des Straßenfertigers auf der Stelle bzw. in einem sehr kleinen Bereich möglich. Dies ist insbesondere vom Vorteil, wenn die Herstellung des Straßenbelags in einem sehr engen und kleinen Bereich stattfinden muss.

Bevorzugte Ausführungsbeispiele von Straßenfertigern werden nachfolgend anhand der Zeichnungen näher erläutert. In dieser zeigen:
- Fig. 1: eine schematische Seitenansicht eines Straßenfertigers,
- Fig. 2: eine schematische Darstellung eines Fahrersitzes mit einem Bedienelement,
- Fig. 3: eine schematische Darstellung des Bedienelements,
- Fig. 4: eine schematische Darstellung eines Moduls des Bedienelements,
- Fig. 5: eine schematische Darstellung eines Nivelliersystems,
- Fig. 6: ein Signalblockschaltbild einer elektrischen Steuerung, und
- Fig. 7: ein Signalblockschaltbild einer elektrischen Steuerung.

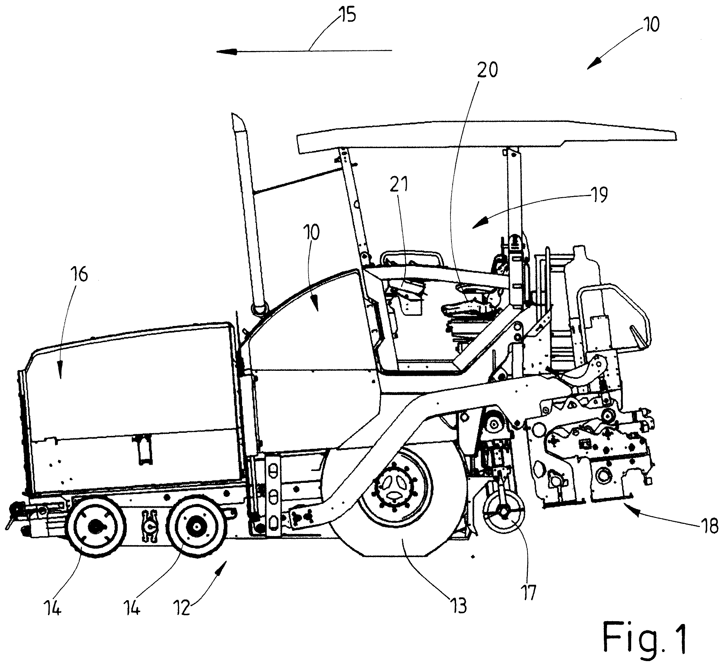

Ein in Fig. 1 schematisch dargestellter Straßenfertiger 10 dient zur Herstellung von Straßenbelägen, dabei kann es sich um Straßenbeläge jeder Art handeln.

Der Straßenfertiger 10 ist selbstfahrend ausgebildet. Dazu verfügt er über eine zentrale Antriebseinheit 11, die beispielsweise einen Verbrennungsmotor aufweist, der Hydraulikpumpen zur Versorgung von Hydraulikmotoren und gegebenenfalls einen Generator zur Erzeugung von Energie für elektrische Antriebe antreibt.

Der Straßenfertiger 10 weist ein Fahrwerk 12 auf, das im gezeigten Ausführungsbeispiel als Radfahrwerk ausgebildet ist, aber auch als Raupenfahrwerk oder ein anderes Fahr- bzw. Laufwerk ausgebildet sein kann. Das in Fig. 1 dargestellte Fahrwerk 12 weist zwei Antriebsräder 13 und vier lenkbare Räder 14 auf. Die Antriebsräder 13 werden von der Antriebseinheit 11 derart angetrieben, dass der Straßenfertiger 10 in Fertigungsrichtung 15 vorwärts bewegbar ist.

In Fertigungsrichtung 15 gesehen ist vor der Antriebseinheit 11 ein wannen- bzw. muldenartig ausgebildeter Vorratsbehälter 16 angeordnet. Der Vorratsbehälter 16 nimmt einen Vorrat des zur Herstellung des Straßenbelags dienenden Materials, beispielsweise Asphalt, auf. Gegebenenfalls können auch mehrere Vorratsbehälter vorgesehen sein.

Durch nicht gezeigte Förderorgane wird das Straßenbaumaterial vom Vorratsbehälter 16 unter der Antriebseinheit 11 hindurch zum, in Fertigungsrichtung 15 betrachtet, hinteren Ende des Straßenfertigers 10 transportiert. Von einer hinter dem Fahrwerk 12 angeordneten Verteilerschnecke 17 wird das Straßenbaumaterial über die gesamte Arbeitsbreite des Straßenfertigers 10 verteilt. Dabei gelangt ein Vorrat des Straßenbaumaterials vor eine, hinter der Verteilerschnecke 17 und dem Fahrwerk 12 angehängte, auf- und abbewegbaren hinter Einbaubohle 18.

Der Straßenfertiger 10 wird von einer nicht dargestellten Bedienperson von einem Bedienstand 19 aus gesteuert. Dieser Bedienstand 19 kann als geschlossene oder offene Kabine ausgebildet sein. Dabei weist der Bedienstand einen Fahrersitz 20 und ein Bedienpult 21 auf.

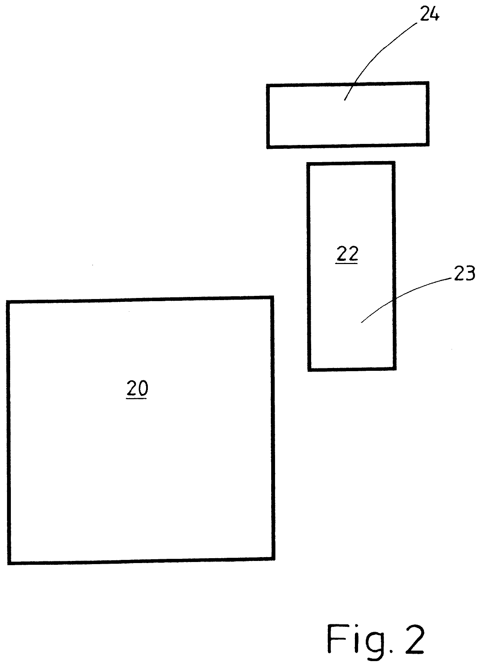

Dem Fahrersitz 20 bzw. einer Armlehne 22 des Fahrersitzes 20 kann ein Bedienelement 23 zugeordnet sein (Fig. 2). Über dieses in die Armlehne 22 integrierte Bedienelement 23 kann die auf dem Fahrersitz 20 sitzende Bedienperson den Betrieb des Straßenfertigers steuern und kontrollieren. Durch die Integrierung des Bedienelements 23 in die Armlehne 22 behält die Bedienperson bei jeglicher Orientierung des Fahrersitzes 20 die Kontrolle bzw. die Möglichkeit den Straßenfertiger 10 zu bedienen. Auch wenn beispielsweise der Fahrersitz 20 um 180 Grad gedreht ist oder zu einer Seite verschoben ist, bleibt die relative Positionierung der Bedienperson zum Bedienelement 23 gleich.

Die von der Bedienperson vorgenommenen Einstellungen bzw. eingestellten Parameter aber auch die Betriebs- und Maschinenparameter lassen sich in einem Display 24, was ebenfalls dem Fahrersitz 20 zugeordnet ist, darstellen bzw. ablesen. Das Display 24 kann dabei entweder direkt an der Armlehne 22 des Fahrersitzes 20 befestigt sein, oder sich am Bedienpult 21 des Bedienstandes 19 befinden. Die relative Ausrichtung der Armlehne 22 zum Fahrersitz 20 ist nicht auf die in der Figur 2 dargestellten eingeschränkt. Vielmehr kann das Bedienelement 23 auch in einer linken Armlehne 22 integriert sein oder einem beliebigen anderen Teil des Fahrersitzes 20 zugeordnet sein.

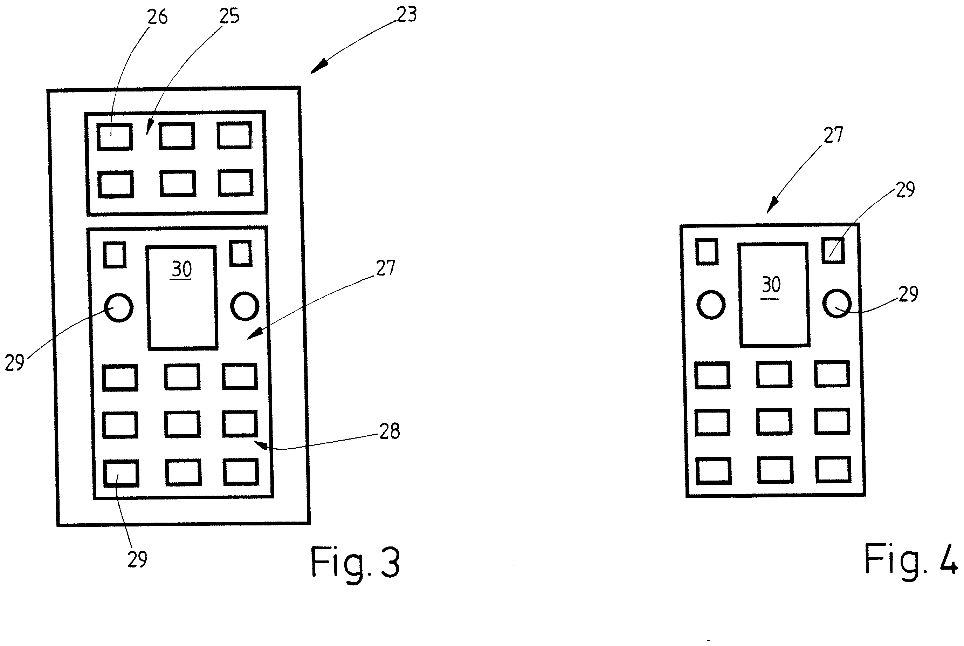

Das Bedienelement 23 weist ein fest mit dem Bedienelement 23 verbundenes Eingabefeld 25 auf (Fig. 3). Dieses Eingabefeld 25 kann beispielsweise Tasten 26 oder andere Eingabemittel aufweisen. Über die Tasten 26 können verschiedene Betriebs-, Maschinen- oder Herstellungsparameter manuell von dem Fahrersitz 20 aus eingegeben werden. Des Weiteren weist das Bedienelement 23 ein Modul 27 auf. Dieses Modul 27 ist zunächst fest im Bedienelement 23 angeordnet bzw. arretiert. Es bildet im in Figur 3 dargestellten Zustand eine Einheit mit dem Bedienelement 23. Das Modul 27 weist ebenso ein Eingabefeld 28 mit verschiedenen Eingabemitteln 29 auf. Bei diesem Eingabemittel 29 kann es sich um Taster oder Drehknöpfe oder ähnlichem handeln. Des Weiteren weist das Modul 27 ein Display 30 auf. Dieses Display 30 dient zur Darstellung von eingegebenen Werten bzw. Parametern oder der Darstellung von aktuellen Betriebs- oder Maschinenparametern. Das Display 30 kann auch als Touchscreen ausgebildet sein, so dass es auch als Eingabemittel dienen kann.

Das Modul 27 kann aus dem Bedienelement 23 entnommen werden (Fig. 4). Das Entnehmen erfolgt durch leichte Druckausübung auf das Modul 27 oder eine ähnliche Entrasthandlung. Das Modul 27 im vom Bedienelement 23 gelösten Zustand kann als mobiles Bedienelement betrachtet und eingesetzt werden. Über das Modul 27 lassen sich alle Hauptfunktionen des Straßenfertigers 10 steuern bzw. alle zum Betrieb des Straßenfertigers 10 notwendigen Parametern einstellen und ablesen. Dabei kann das Modul 27 über ein Kabel mit dem Bedienelement 23 oder dem Bedienpult 21 des Bedienstandes 19 verbunden sein. Es ist außerdem vorgesehen, dass das Modul 27 alternativ kabellos, das heißt beispielsweise per Funk oder Bluetooth oder WLAN, mit dem Bedienelement 23 bzw. dem Bedienpult 21 verbunden ist. Das Bedienelement 23 weist zum empfangen bzw. senden entsprechende komplementäre Sender bzw. Empfänger auf (Fig. 4). Das Modul 27 tauscht unabhängig von der Verbindung Daten mit dem Bedienelement 23 und oder mit dem Bedienpult 21 aus. Zum Empfang bzw. Senden von Signalen weist das Modul 27 nicht dargestellte Sender bzw. Empfänger auf.

Vor Beginn der Herstellung des Straßenbelags muss der Straßenfertiger 10 insbesondere die Einbaubohle 18 ausgerichtet bzw. einnivelliert werden. Zum Einnivellieren weist der Straßenfertiger 10 bzw. die Einbaubohle 18 Sensoren 31, 32 auf. Bei diesen Sensoren 31, 32 kann es sich um Abstandssensoren, Neigungssensoren, Einpegelungssensoren oder dergleichen handeln. Diese Sensoren 31, 32 sind an verschiedenen Positionen des Straßenfertigers 10 bzw. der Einbaubohle 18 positioniert. Gesteuert werden diese Sensoren 31, 32 über Bedieneinheiten 33, 34. Diese Bedieneinheiten 33, 34 weisen beispielsweise ein Display 35 und ein Eingabefeld 36 auf. Die Bedieneinheiten kommunizieren mit den Sensoren 31, 32 kabellos. Dabei werden sowohl Daten von den Bedieneinheiten 33, 34 an die Sensoren 31, 32 gesendet wie zum Beispiel Einstellungsparameter; die Sensoren 31, 32 senden aber auch die aufgenommenen Messdaten an die Bedieneinheiten 33, 34 zurück. Die empfangenen Daten werden beispielsweise von den Displays 35 der Bedieneinheiten 33, 34 direkt dargestellt, sodass eine Bedienperson über die Eingabefelder 36 weitere Eingaben wie beispielsweise Korrekturen der Nivellierung vornehmen kann.

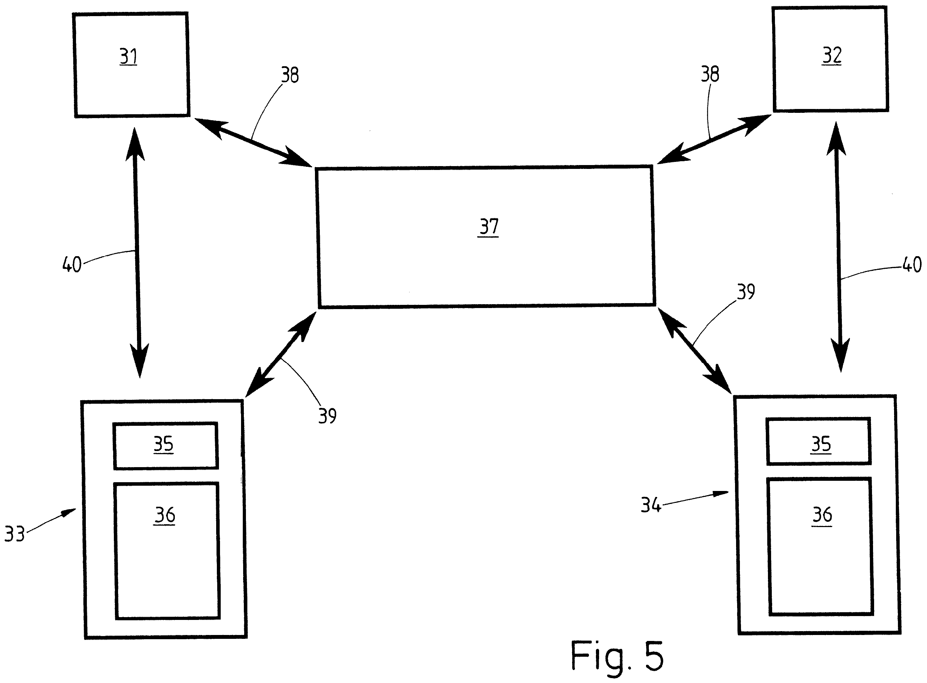

Sowohl die Sensoren 31, 32 als auch die Bedieneinheiten 33, 34 stehen in Verbindung mit einem zentralen Prozessrechner 37 des Straßenfertigers 10. In diesem Prozessrechner 37 laufen alle Signale und Daten der Sensoren 31, 32 und der Bedieneinheiten 33, 34 zusammen. So sind die Sensoren 31, 32 direkt über ein Kabel oder kabellos über Funk mit dem Prozessrechner 37 verbunden (wie in der Fig. 5 durch Pfeile 38 dargestellt). Andererseits kommunizieren die Bedieneinheiten 33 ,34 auch über Kabel oder kabellos über Funk mit dem Prozessrechner 37 (wie in Fig. 5 durch Pfeile 39 dargestellt). Durch den Prozessrechner 37 werden sämtliche Daten der Sensoren 31, 32 ausgewertet und weiterverarbeitet. So kann bei einer noch nicht ordnungsgemäßen Nivellierung ein Signal an die Sensoren 31, 32 oder die Bedieneinheiten 33, 34 ausgegeben werden, um die Nivellierung zu korrigieren. Dadurch steht der Prozessrechner außerdem in Verbindung mit nichtdargestellten Motoren zur Steuerung beispielsweise der Einbaubohle 18. Die Sensoren 31, 32 kommunizieren, wie durch die Pfeile 40 der Fig. 5 dargestellt, mit den Bedieneinheiten 33, 34.

Der Prozessrechner 37 ist außerdem verbunden mit dem Bedienelement 23 bzw. mit dem Modul 27, so dass der Prozessrechner 37 des Straßenfertigers 10 alle Maschinen-, Betriebs- und Herstellungsparameter erfasst und abspeichert. Des Weiteren dient der Prozessrechner 37 zur Optimierung des Betriebes des Straßenfertigers 10 und gibt entsprechend Signale an die Steuereinheiten bzw. Motoren aus.

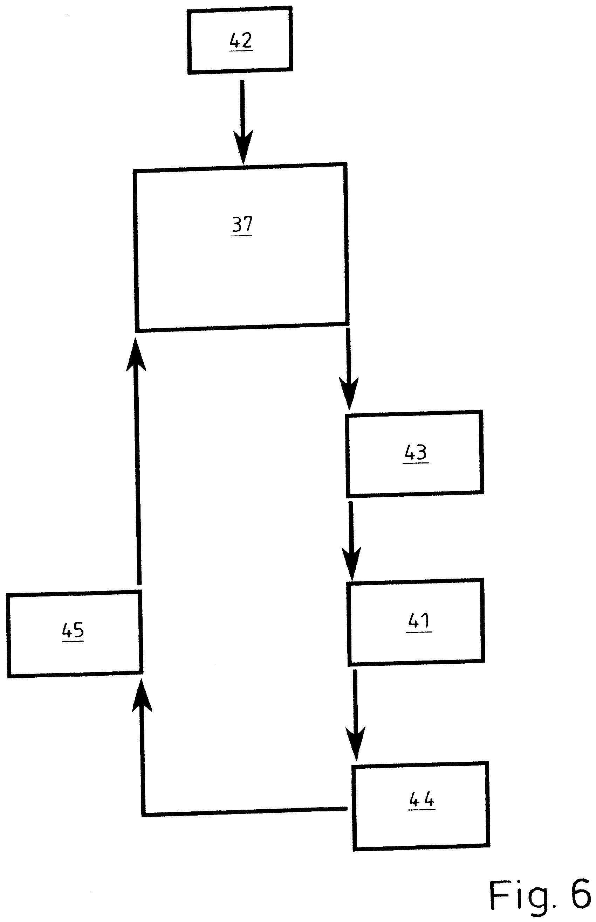

Bei dem hier dargestellten Straßenfertiger 10 bzw. Radfertiger sind Lenkzylinder 41 der steuerbaren Räder 14 elektrisch ansteuerbar. Diese elektrische Ansteuerung bzw. Steuerung der Lenkzylinder 41 erfolgt auch über den zentralen Prozessrechner 37 des Straßenfertigers 10 (Fig. 6). Bei dieser elektrischen Steuerung der Lenkzylinder 41 der steuerbaren Räder 14 wird über einen Lenkwinkel-Sollwertgeber 42, bei dem es sich beispielsweise um ein Potentiometer, Inkrementalgeber oder ähnliches handelt und dem Bedienelement 23 zugeordnet sein kann, ein Sollwert für den Lenkwinkel vorgegeben. Dieser Sollwert wird an den Prozessrechner 37 übergeben (Fig. 6). Der Prozessrechner 37 steuert wiederrum auf der Basis der Sollwerte des Lenkwinkel-Sollwertgebers 42 ein Steuerventil 43 an. Diese elektrische Ansteuerung des Steuerventils 43 bewirkt, dass der Lenkzylinder 41 in definierter Menge mit einem Hydrauliköl versorgt wird. Durch diese Versorgung des Lenkzylinders 41 mit Hydrauliköl führt dazu, dass der Lenkzylinder 41 über eine Lenkungsachse 44 der Räder 14 den Einschlagwinkel der Räder 14 verstellt, und zwar so lange, bis der durch den Lenkwinkel-Istwertgeber 45 ermittelte Lenkwinkel mit dem durch den Lenkwinkel-Sollwertgeber 42 voreingestellten Sollwert des Lenkwinkels übereinstimmt. Diese rückkopplungsartige Einstellung des Lenkwinkels wird durch den Prozessrechner 37 gesteuert. Diese in der Fig. 6 durch ein Blockschaltbild dargestellte elektrische Ansteuerung der Lenkzylinder 41 zum Lenken der Räder 14 erfolgt für jedes lenkbare Rad 14 individuell. Es können aber auch Räder 14 parallel oder paarweise zusammengekoppelt werden, sodass sie gleichermaßen angesteuert werden.

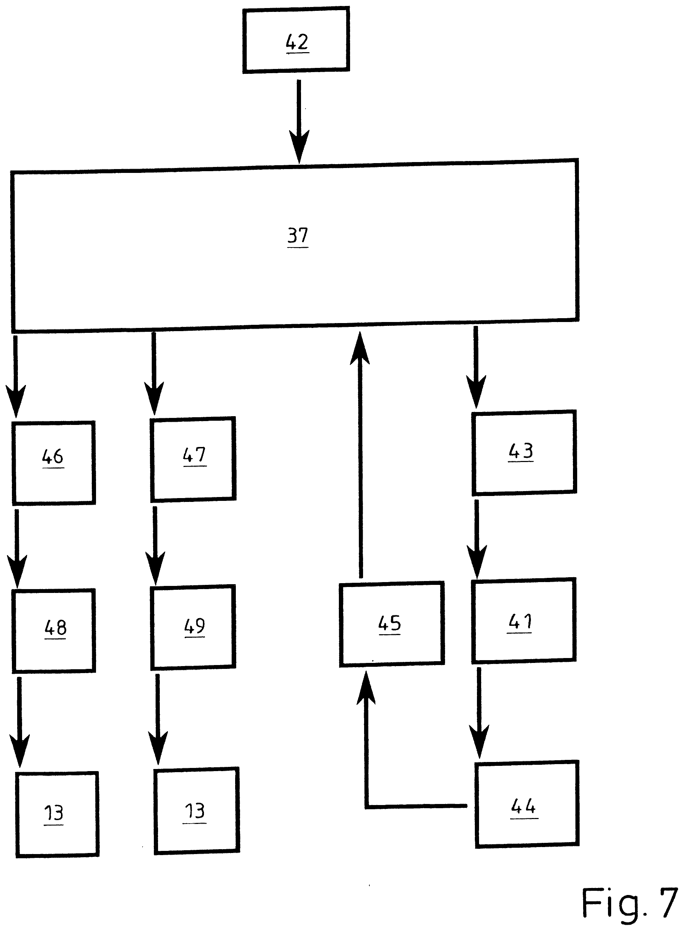

Zusätzlich zu der eben beschriebenen elektrischen Ansteuerung der Lenkzylinder 41 zur Steuerung der steuerbaren Räder 14 können auch die Antriebsräder 13 derart angesteuert werden, um das Lenkverhalten bzw. ein Lenkradius des Straßenfertigers 10 zu verbessern, insbesondere zu verkleinern (Fig. 7). Dabei erfolgt die Steuerung über die Räder 14 wie soeben beschrieben (Figur 7). Zusätzlich kann die Drehzahl der nicht dargestellten Motoren für die Antriebsräder 13 individuell verändert werden. Dazu wird zunächst genau wie zuvor beschrieben durch den Lenkwinkel-Sollwertgeber 42 ein Lenkwinkel-Sollwert an den Prozessrechner 37 übertragen. Dieser steuert dann Steuerventile 46, 47, die eine entsprechende Menge Hydrauliköl den Motoren 48, 49 zuführt, so dass der Lenkradius der Antriebsräder 13 verändert wird, bis der durch den Lenkwinkel-Sollwertvorgeber 42 vorbestimmte Lenkwinkel erreicht wird. Dabei erfolgt eine ähnliche Rückkopplung über einen nicht dargestellten Lenkwinkel-Istwertgeber der Räder 13 mit dem Prozessrechner 37, wie für die lenkbaren Räder 14 dargestellt.

Bei den Antriebsrädern 13 erfolgt somit die Lenkung nicht über Lenkzylinder 41, sondern vielmehr durch eine Beschleunigung bzw. Abbremsen der Radmotoren 48, 49, wie es beispielsweise von Kettenfahrzeugen bekannt ist. Durch diese Kombination der elektrischen Ansteuerung der Lenkzylinder 41 und der Radmotoren 48, 49 kann das Lenkverhalten des Straßenfertigers 10 verbessert werden.

Es kann des Weiteren vorgesehen sein, dass die Lenkung des Straßenfertigers 10 ausschließlich durch eine elektrische Ansteuerung der Radmotoren 48 und 49 erfolgt, sodass durch eine gegensinnige Beschleunigung bzw. Abbremsen der Antriebsräder 13 der Straßenfertiger 10 gesteuert wird. Dabei wird der gesamte Bewegungsablauf bzw. Steuerungsablauf des Straßenfertigers 10 ständig von dem Prozessrechner 37 überwacht und gegebenenfalls optimiert und entsprechende Parameter an die Bedienelemente 23 bzw. die Bedieneinheiten 34 übertragen. Durch die gleichen Bedienelemente 23 bzw. das Modul 27 und/oder die Bedieneinheit 34 kann der Steuervorgang des Straßenfertigers 10 ständig kontrolliert oder gesteuert werden.

## Patentansprüche

1. Straßenfertiger (10) zur Herstellung eines Straßenbelags mit einem antreibbaren Fahrwerk (12), mindestens einer in Einbaurichtung (15) betrachtet hinten am Fahrwerk (12) auf- und abbewegbar angehängten Einbaubohle (18), einer vor der Einbaubohle (18) angeordneten Verteilerschnecke (17), einem über dem Fahrwerk (12) angeordneten Bedienstand (19) und mindestens einem Verbrennungsmotor (11), wenigstens einem vor dem Bedienstand (19) auf dem Fahrwerk (12) angeordneten Vorratsbehälter (16) für heißes Straßenbaumaterial und einem sich unter dem Bedienstand (19) vom Vorratsbehälter (16) zur Verteilerschnecke (17) erstreckenden Förderer, und mit einem Nivelliersystem zum Einnivellieren der Einbaubohle (18) für die Herstellung des Straßenbelags, das von einem zentralen Prozessrechner (37) des Straßenfertigers (10) steuerbar ist, wobei das Nivelliersystem zugeordnete Bedieneinheiten (33, 34) zum Bedienen des Nivelliersystems sowie Sensoren (31, 32) zur Ermittlung von Herstellungsparameter, insbesondere einer Einbauhöhe und einer Fahrbahnneigung, als auch Sensoren für ein Bohlendachprofil der Einbaubohle (18), aufweist, wobei ein in eine Armlehne (22) eines Fahrersitzes (20) des Bedienstandes (19) integriertes Bedienelement (23) zum Steuern und Kontrollieren des Betriebs des Straßenfertigers (10) vorgesehen ist, wobei das Bedienelement (23) mit dem zentralen Prozessrechner (37) verbunden ist, so dass der Prozessrechner (37) alle Maschinen-, Betriebs- und Herstellungsparameter erfasst und abspeichert in dem zudem alle Signale und Daten der Sensoren (31, 32) und der Bedieneinheiten (33, 34) zusammenlaufen und wobei mindestens eine der Bedieneinheiten (33, 34) ein Eingabemittel (29) und eine Schnittstelle zur kabellosen Datenübertragung aufweist, derart dass durch die kabellose Bedieneinheit eine Bedienperson sich mit dem Eingabemittel frei um den Straßenfertiger bewegen kann, und wobei mindestens eine der Bedieneinheiten (33, 34) insbesondere ein Darstellungsmittel aufweist, und wobei zusätzliche Bedienmittel an die Bedieneinheiten (33, 34) anschließbar sind.

2. Straßenfertiger (10) nach Anspruch 1, **dadurch gekennzeichnet, dass** dem Nivelliersystem zwei Bedieneinheiten (33, 34) für das Bedienpersonal zugeordnet sind.

3. Straßenfertiger (10) nach einem der vorhergehenden Ansprüche, **dadurch gekennzeichnet, dass** mindestens eine der Bedieneinheiten (33, 34) kompakt bzw. flach ausgebildet ist und jeweils an einem Bedienplatz des Straßenfertigers (10) verstaubar ist.

4. Straßenfertiger (10) nach einem der vorhergehenden Ansprüche, **dadurch gekennzeichnet, dass** mindestens eine der Bedieneinheiten (33, 34) kompakt bzw. flach ausgebildet ist und jeweils an einem Bohlen-Seitenschild des Straßenfertigers (10) verstaubar ist.

5. Straßenfertiger (10) nach einem der vorhergehenden Ansprüche, **dadurch gekennzeichnet, dass** die Sensoren (31, 32) jeweils mindestens eine einheitliche Datenschnittstelle, eine einheitliche hardwaretechnische Schnittstelle und/oder eine selbstständige Identifikation gegenüber dem Prozessrechner (37) aufweisen.

## Claims

1. Paver (10) for producing a road covering, with a driveable chassis (12), at least one paving screed (18) that is attached to the rear of the chassis (12), as seen in the paving direction (15), such that it can be moved up and down, a spreader screw (17) arranged upstream of the paving screed (18), an operating stand (19) arranged above the chassis (12) and at least one internal combustion engine (11), at least one hopper (16) for hot road construction material, which hopper is arranged on the chassis (12) upstream of the operating stand (19), and a conveyor extending under the operating stand (19) from the hopper (16) to the spreader screw (17), and with a levelling system for levelling the paving screed (18) for producing the road covering, which levelling system can be controlled by a central process computer (37) of the paver (10), wherein the levelling system has associated operating units (33, 34) for operating the levelling system and sensors (31, 32) for determining production parameters, in particular a paving height and a road inclination, and sensors for a screed top profile of the paving screed (18), wherein an operating element (23) which is integrated in an armrest (22) of a driver's seat (20) of the operating stand (19) and is intended to control and monitor the operation of the paver (10) is provided, wherein the operating element (23) is connected to the central process computer (37), with the result that the process computer (37) captures and stores all machine, operating and production parameters by virtue of all signals and data from the sensors (31, 32) and from the operating units (33, 34) also converging, and wherein at least one of the operating units (33, 34) has an input means (29) and an interface for wireless data transmission such that, by virtue of the wireless operating unit, an operator can move freely around the paver with the input means, and wherein at least one of the operating units (33, 34) has a presentation means, in particular, and wherein additional operating means can be connected to the operating units (33, 34).

2. Paver (10) according to Claim 1, **characterized in that** two operating units (33, 34) for the operating personnel are assigned to the levelling system.

3. Paver (10) according to one of the preceding claims, **characterized in that** at least one of the operating units (33, 34) is compact and/or flat and can be respectively stowed at an operating station of the paver (10).

4. Paver (10) according to one of the preceding claims, **characterized in that** at least one of the operating units (33, 34) is compact and/or flat and can be respectively stowed at a screed side plate of the paver (10).

5. Paver (10) according to one of the preceding claims, **characterized in that** the sensors (31, 32) each have at least one standard data interface, a standard hardware interface and/or an independent identification with respect to the process computer (37).

## Revendications

1. Finisseuse de routes (10) pour la fabrication d'un revêtement de chaussée, comprenant un châssis (12) pouvant être entraîné, au moins une poutre lisseuse (18) suspendue à l'arrière du châssis (12) de manière déplaçable vers le haut et vers le bas, vue dans la direction de lissage (15), une vis de distribution (17) disposée à l'avant de la poutre lisseuse (18), un poste de commande (19) disposé au-dessus du châssis (12) et d'au moins un moteur à combustion interne (11), au moins un réservoir (16) de matériau de construction routière chaud disposé sur le châssis (12) à l'avant du poste de commande (19) et un transporteur s'étendant sous le poste de commande (19), du réservoir (16) jusqu'à la vis de distribution (17), et comprenant un système de nivellement destiné à niveler la poutre lisseuse (18) pour la fabrication du revêtement de chaussée, qui peut être commandé par un calculateur de processus central (37) de la finisseuse de routes (10), le système de nivellement comportant des unités de commande (33, 34) associées pour la commande du système de nivellement ainsi que des capteurs (31, 32) pour la détermination de paramètres de fabrication, en particulier une hauteur de lissage et une inclinaison de la chaussée, ainsi que des capteurs pour un profil de capot de poutre de la poutre lisseuse (18),
un élément de commande (23) intégré dans un accoudoir (22) d'un siège de conducteur (20) du poste de commande (19) étant prévu pour commander et contrôler le fonctionnement de la finisseuse de routes (10), l'élément de commande (23) étant relié au calculateur de processus central (37) de sorte que le calculateur de processus (37) acquiert et mémorise tous les paramètres de machine, de fonctionnement et de fabrication, collectant en outre tous les signaux et toutes les données des capteurs (31, 32) et des unités de commande (33, 34), et au moins l'une des unités de commande (33, 34) comportant un moyen de saisie (29) et une interface pour la transmission de données sans fil, de telle sorte que l'unité de commande sans fil permette à un opérateur de se déplacer librement autour de la finisseuse de routes avec le moyen de saisie, et au moins l'une des unités de commande (33, 34) comportant en particulier un moyen d'affichage, et des moyens de commande supplémentaires pouvant être raccordés aux unités de commande (33, 34).

2. Finisseuse de routes (10) selon la revendication 1, **caractérisée en ce que** deux unités de commande (33, 34) destinées au personnel de service sont associées au système de nivellement.

3. Finisseuse de routes (10) selon l'une des revendications précédentes, **caractérisée en ce qu'**au moins l'une des unités de commande (33, 34) est réalisée de manière compacte ou plate et peut être rangée respectivement dans un poste de commande de la finisseuse de routes (10).

4. Finisseuse de routes (10) selon l'une des revendications précédentes, **caractérisée en ce qu'**au moins l'une des unités de commande (33, 34) est réalisée de manière compacte ou plate et peut être rangée respectivement sur un panneau latéral de poutre de la finisseuse de routes (10).

5. Finisseuse de routes (10) selon l'une des revendications précédentes, **caractérisée en ce que** les capteurs (31, 32) comportent respectivement au moins une interface de données unifiée, une interface technique matérielle unifiée et/ou une identification autonome par rapport au calculateur de processus (37).
